(19) Europäisches Patentamt
European Patent Office
Office européen des brevets

(11) EP 4 286 163 B1

(12) **EUROPEAN PATENT SPECIFICATION**

(45) Date of publication and mention of the grant of the patent:
**01.04.2026 Bulletin 2026/14**

(21) Application number: **21923139.6**

(22) Date of filing: **06.12.2021**

(51) International Patent Classification (IPC):
***B41J 2/01*** *(2006.01)* ***C09D 11/30*** *(2014.01)*
***C09D 11/38*** *(2014.01)* ***B41M 5/00*** *(2006.01)*
***C09D 11/101*** *(2014.01)* ***C09D 11/322*** *(2014.01)*

(52) Cooperative Patent Classification (CPC):
**C09D 11/38; C09D 11/101; C09D 11/322**

(86) International application number:
**PCT/JP2021/044782**

(87) International publication number:
**WO 2022/163134 (04.08.2022 Gazette 2022/31)**

(54) **ELECTRON BEAM CURABLE INK, AND IMAGE RECORDING METHOD**

ELEKTRONENSTRAHLHÄRTBARE TINTE UND BILDAUFZEICHNUNGSVERFAHREN

ENCRE DURCISSABLE PAR FAISCEAU D'ÉLECTRONS ET PROCÉDÉ D'ENREGISTREMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2021 JP 2021013235**

(43) Date of publication of application:
**06.12.2023 Bulletin 2023/49**

(73) Proprietor: **FUJIFILM Corporation**
**Tokyo 106-8620 (JP)**

(72) Inventor: **ARAKI, Kenjiro**
**Ashigarakami-gun,**
**Kanagawa 258-8577 (JP)**

(74) Representative: **Klunker IP**
**Patentanwälte PartG mbB**
**Destouchesstraße 68**
**80796 München (DE)**

(56) References cited:
**WO-A1-2020/012159**
**WO-A1-2020/012160**
**JP-A- 2006 326 983**
**JP-A- 2013 124 260**
**JP-A- 2013 215 917**
**JP-A- 2019 511 628**
**JP-A- 2020 094 102**
**JP-A- 2020 169 267**
**JP-A- H08 218 016**
**US-A1- 2015 116 432**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 286 163 B1

## Description

BACKGROUND OF THE INVENTION

1. Field of the Invention

The present disclosure relates to an electron beam curable ink and an image recording method.

2. Description of the Related Art

In one known image recording method, an ink is applied onto a recording medium, and the applied ink is cured by irradiation with actinic rays such as ultraviolet rays to obtain an image. In recent years, the use of electron beams in place of ultraviolet rays as actinic rays for irradiation has been studied.

For example, JP2020-33443A states that an electron beam curable resin that is cured by irradiation with an electron beam, the electron beam curable resin being composed of a photopolymerizable monomer having a molecular weight of 212 or more or composed mainly of the photopolymerizable monomer with another photopolymerizable material added, is used as an ink.

JP2016-180072A discloses an electron beam curable inkjet ink containing a colorant and a polymerizable compound, wherein the polymerizable compound contains a monofunctional monomer and/or a bifunctional monomer, the total content of the monofunctional monomer and the bifunctional monomer is 95% to 100% by weight relative to the total amount of the polymerizable compound, and the ink has a viscosity of 100 mPa·s or less.

JP2018-86726A discloses a method for forming a cured film, the method including a composition application step of applying a curable composition including a polymerizable compound onto a recording medium and an irradiation step of irradiating the curable composition with two or more kinds of actinic rays, wherein at least an electron beam with an acceleration voltage of 130 kV or less is used as one of the actinic rays in the irradiation step, and the electron beam is applied so as to achieve an absorbed dose of 20 to 75 kGy in the irradiation step.
WO 2020/012160 A1, relates to electron beam curable inks. The inks comprise dipropylene glycol diacrylate, poly(ethylene glycol 300) diacrylate, ditrimethylolpropane tetraacrylate and 2-(2-vinyloxyethoxy)ethyl acrylate as polymerizable monomers.
US 2015/0116432 A1, teaches an electron beam curable ink comprising curable monomers, such as neopentyl glycol diacrylate, and a surfactant.

SUMMARY OF THE INVENTION

An ink image formed by applying an ink onto a substrate and curing the ink is sometimes required to be less likely to undergo leaching (i.e., migration) of components included in the ink out of the ink image.

According to an embodiment of the present invention, an electron beam curable ink less likely to undergo migration and an image recording method are provided.

The present invention is defined in appended claims.

According to an embodiment of the present invention, an electron beam curable ink less likely to undergo migration and an image recording method are provided.

DESCRIPTION OF THE PREFERRED EMBODIMENTS

Hereinafter, an electron beam curable ink and an image recording method according to the present disclosure will be described in detail.

In the present disclosure, any numerical range expressed using "to" means a range including numerical values before and after "to" as lower and upper limit values.

In the present disclosure, if there are two or more substances corresponding to one component in a composition, the amount of the component in the composition means the total amount of the two or more substances present in the composition unless otherwise specified.

In numerical ranges described in stages in the present disclosure, the upper limit value or the lower limit value described in one numerical range may be replaced with the upper limit value or the lower limit value of other numerical ranges described in stages or may be replaced with values described in Examples.

In the present disclosure, the term "step" encompasses not only an independent step but also a step that is not clearly distinguished from another step if the desired object of the step is achieved.

In the present disclosure, a combination of preferred embodiments is a more preferred embodiment.

In the present disclosure, "(meth)acrylate" is a concept that encompasses both acrylate and methacrylate,

"(meth)acryloyl group" is a concept that encompasses both an acryloyl group and a methacryloyl group, and "(meth)acrylic acid" is a concept that encompasses both acrylic acid and methacrylic acid.

In the present disclosure, the term "image" refers to all types of films formed using an ink, and the term "image recording" refers to the formation of an image (i.e., a film).

The concept of "image" in the present disclosure also encompasses solid images. Electron Beam Curable Ink

The electron beam curable ink (hereinafter also referred to simply as the "ink") of the present disclosure contains a polymerizable monomer A having a ClogP value of 2.3 or less and a surfactant. The content of the surfactant is 0.3% by mass or more relative to the total amount of the electron beam curable ink, and the content of a polymerization initiator is less than 1% by mass relative to the total amount of the electron beam curable ink.

In the present disclosure, the term "electron beam curable ink" refers to an ink that is cured by irradiation with an electron beam. The ink of the present disclosure is an electron beam curable ink and is distinguished from ultraviolet ray curable inks which are cured by irradiation with ultraviolet rays. The ink of the present disclosure can be cured by irradiation with an electron beam, for example, at an acceleration voltage of 50 kV to 200 kV, a radiation dose of 10 kGy to 100 kGy, and a processing speed of 1 m/min to 200 m/min.

According to the ink of the present disclosure, migration can be suppressed. The reason why this effect is produced is presumably as follows.

In general, image recording using an ink containing a polymerizable monomer is performed by applying the ink onto a substrate and irradiating the ink applied onto the substrate (hereinafter also referred to as an "ink film") with actinic rays. In this image recording, when the ink film is irradiated with actinic rays, the polymerizable monomer in the ink film is polymerized, and the ink film is cured. This results in a cured ink film, that is, an ink image. The ink of the present disclosure is an electron beam curable ink, and electron beams are used as actinic rays.

The ink of the present disclosure includes a polymerizable monomer A having a ClogP value of 2.3 or less. When the polymerizable monomer A having a ClogP value of 2.3 or less is included in the ink, oxygen is less likely to dissolve in the ink, that is, the amount of dissolved oxygen in the ink decreases. Presumably, the decrease in the amount of dissolved oxygen in the ink accelerates the polymerization reaction to provide high curability. The ink of the present disclosure includes a surfactant, and the content of the surfactant is 0.3% by mass or more. Presumably, this facilitates the spread of an ink film formed by applying the ink onto a substrate, thus improving electron beam transmission, which results in high curability. Presumably, the use of the ink of the present disclosure improves the curability of an ink film, and as a result, leaching of components included in the ink is suppressed. In the present disclosure, leaching of a component included in an ink is referred to as "migration".

By contrast, the ink disclosed in JP2020-33443A does not include a surfactant. The content of a surfactant in the ink disclosed in JP2016-180072A is 0.2% by mass, and the content of a surfactant in the ink disclosed in JP2018-86726A is 0.1% by mass. Therefore, when any of the inks disclosed in JP2020-33443A, JP2016-180072A, and JP2018-86726A is applied onto a substrate, the ink film will probably not spread, thus resulting in insufficient electron beam transmission and failing to suppress migration.

Hereinafter, components included in the ink of the present disclosure will be described.

Polymerizable Monomer A Having ClogP Value of 2.3 or Less

The ink of the present disclosure contains at least one polymerizable monomer A having a ClogP value of 2.3 or less, which comprises at least one selected from the group consisting of triethylene glycol diacrylate and tetraethylene glycol diacrylate. Hereinafter, the polymerizable monomer having a ClogP value of 2.3 or less is also referred to simply as the "polymerizable monomer A". A polymerizable monomer whose ClogP value is not particularly specified is also referred to simply as a "polymerizable monomer".

In the present disclosure, ClogP values are calculated using the fragment method. One example of calculation software using the fragment method is ChemDraw Professioal 16.

A polymerizable monomer refers to a monomer having at least one polymerizable group in one molecule. From the viewpoint of curability, the polymerizable group in the polymerizable monomer A is preferably a radically polymerizable group, more preferably an ethylenically unsaturated group.

In the present disclosure, a monomer refers to a compound having a molecular weight of 1,000 or less. In the present disclosure, the molecular weight of a compound having a molecular weight of 1,000 or less can be calculated from the type and number of elements constituting the compound.

The molecular weight of the polymerizable monomer A is preferably 600 or less, more preferably 300 or less. The lower limit of the molecular weight of the polymerizable monomer A is, for example, 100.

The polymerizable monomer A is a bifunctional polymerizable monomer (hereinafter referred to as a "bifunctional monomer"). Additional polymerizable monomers A may be a monofunctional polymerizable monomer (hereinafter referred to as a "monofunctional monomer"), , and a tri- or higher functional polymerizable monomer (hereinafter referred to as a "tri- or higher functional monomer"). The polymerizable monomer A may be a combination including two or more of a

monofunctional monomer, a bifunctional monomer, and a tri- or higher functional monomer and comprises at least one selected from the group consisting of triethylene glycol diacrylate and tetraethylene glycol diacrylate.

Examples of polymerizable monomers (specifically, monofunctional monomers, bifunctional monomers, and tri- or higher functional monomers) are given below. The polymerizable monomer A may be, for example, a polymerizable monomer having a ClogP value of 2.3 or less selected from the polymerizable monomers given below. A polymerizable monomer B, which will be described later, may be, for example, a polymerizable monomer having a ClogP value of more than 2.3 and a viscosity of 20 mPa·s or less selected from the polymerizable monomers given below. A "polymerizable monomer other than the polymerizable monomer A and the polymerizable monomer B", which will be described later, may be, for example, a polymerizable monomer having a ClogP value of more than 2.3 and a viscosity of more than 20 mPa·s selected from the polymerizable monomers given below.

Monofunctional Monomer

Examples of monofunctional monomers include monofunctional (meth)acrylates, monofunctional (meth)acrylamides, monofunctional aromatic vinyl compounds, monofunctional vinyl ethers, and monofunctional N-vinyl compounds.

Examples of monofunctional (meth)acrylates include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, norbornyl (meth)acrylate, isobornyl (meth)acrylate, adamantyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, ethylcarbitol (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, cyclic trimethylolpropane formal (meth)acrylate, phenyl glycidyl ether (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinic acid, 2-methacryloyloxyhexahydrophthalic acid, 2-methacryloyloxyethyl-2-hydroxypropyl phthalate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide-modified (hereinafter referred to as EO-modified) phenol (meth)acrylate, EO-modified cresol (meth)acrylate, EO-modified nonylphenol (meth)acrylate, propylene oxide-modified (hereinafter referred to as PO-modified) nonylphenol (meth)acrylate, EO-modified 2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, and phenoxyethylene glycol (meth)acrylate.

Examples of monofunctional (meth)acrylamides include (meth)acrylamide, N-methyl(meth)acrylamide, N-ethyl(meth)acrylamide, N-propyl(meth)acrylamide, N-n-butyl(meth)acrylamide, N-t-butyl(meth)acrylamide, N-butoxymethyl(meth)acrylamide, N-isopropyl(meth)acrylamide, N-methylol(meth)acrylamide, N,N-dimethyl(meth)acrylamide, N,N-diethyl(meth)acrylamide, and (meth)acryloylmorpholine.

Examples of monofunctional aromatic vinyl compounds include styrene, dimethylstyrene, trimethylstyrene, isopropylstyrene, chloromethylstyrene, methoxystyrene, acetoxystyrene, chlorostyrene, dichlorostyrene, bromostyrene, vinylbenzoic acid methyl ester, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, and 4-t-butoxystyrene.

Examples of monofunctional vinyl ethers include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxy polyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl

vinyl ether, chloroethoxyethyl vinyl ether, phenylethyl vinyl ether, and phenoxy polyethylene glycol vinyl ether.

Examples of monofunctional N-vinyl compounds include N-vinylcaprolactam, N-vinylpyrrolidone, N-vinyloxazolidinone, and N-vinyl-5-methyloxazolidinone.

Bifunctional Monomer

Examples of bifunctional monomers include bifunctional (meth)acrylates, bifunctional vinyl ethers, and bifunctional monomers including a vinyl ether group and a (meth)acryloyl group.

Examples of bifunctional (meth)acrylates include ethylene glycol di(meth)acrylate, diethylene glycol di(meth)acrylate, triethylene glycol di(meth)acrylate, propylene glycol di(meth)acrylate, dipropylene glycol di(meth)acrylate, tripropylene glycol di(meth)acrylate, polyethylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerol di(meth)acrylate, pentaerythritol di(meth)acrylate, ethylene glycol diglycidyl ether di(meth)acrylate, diethylene glycol diglycidyl ether di(meth)acrylate, and tricyclodecane dimethanol di(meth)acrylate.

Examples of bifunctional vinyl ethers include 1,4-butanediol divinyl ether (ClogP value: 1.32), ethylene glycol divinyl ether (ClogP value: 0.66), diethylene glycol divinyl ether (ClogP value: 0.47), triethylene glycol divinyl ether (ClogP value: 0.29), polyethylene glycol divinyl ether (ClogP value: 0.29 or less), propylene glycol divinyl ether (ClogP value: 0.97), butylene glycol divinyl ether (ClogP value: 1.32), hexanediol divinyl ether (ClogP value: 2.38), 1,4-cyclohexanedimethanol divinyl ether (ClogP value: 1.66), bisphenol A alkylene oxide divinyl ethers (e.g, bisphenol A ethylene oxide divinyl ether, ClogP value: 5.35), and bisphenol F alkylene oxide divinyl ethers (e.g, bisphenol F ethylene oxide divinyl ether, ClogP value: 4.55).

Examples of bifunctional monomers including a vinyl ether group and a (meth)acryloyl group include 2-(2-vinyloxyethoxy)ethyl (meth)acrylate.

Tri- or Higher Functional Monomer

Examples of tri- or higher functional monomers include tri- or higher functional (meth)acrylates and tri- or higher functional vinyl ethers.

Examples of tri- or higher functional (meth)acrylates include trimethylolethane tri(meth)acrylate, trimethylolpropane tri(meth)acrylate, EO-modified trimethylolpropane tri(meth)acrylate, PO-modified trimethylolpropane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxyethoxytrimethylolpropane, glycerol polyglycidyl ether poly(meth)acrylate, and tris(2-acryloyloxyethyl) isocyanurate.

Examples of tri- or higher functional vinyl ethers include trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, EO-modified trimethylolpropane trivinyl ether, PO-modified trimethylolpropane trivinyl ether, EO-modified ditrimethylolpropane tetravinyl ether, PO-modified ditrimethylolpropane tetravinyl ether, EO-modified pentaerythritol tetravinyl ether, PO-modified pentaerythritol tetravinyl ether, EO-modified dipentaerythritol hexavinyl ether, and PO-modified dipentaerythritol hexavinyl ether.

Specific examples of the polymerizable monomer A include the following compounds. Table 1 and Table 2 show compounds having a ClogP value of 2.3 or less as well as the structural formulae, viscosities, and molecular weights of the compounds.

In the present disclosure, all viscosities are values measured at 25°C.

Table 1

| Name | Structural formula | ClogP value | Viscosity (mPa·s) | Molecular weight |
|---|---|---|---|---|
| γ-Butyrolactone acrylate (GBLA) | 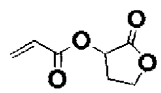 | -0.3 | 23.2 | 156 |

(continued)

| Name | Structural formula | ClogP value | Viscosity (mPa·s) | Molecular weight |
|---|---|---|---|---|
| N,N-Dimethylacrylamide | 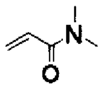 | -0.2 | 1.3 | 99 |
| Acryloylmorpholine (ACMO) | 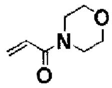 | -0.1 | 11.8 | 141 |
| Polyethylene glycol (400) diacrylate (PEGDA) | 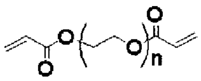 | 0.2 | 52.8 | 522 |
| Isopropylacrylamide (NIPAM) | 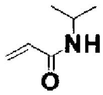 | 0.3 | - | 113 |
| Triethylene glycol divinyl ether (DVE-3) | 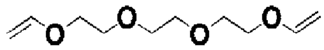 | 0.3 | 3.0 | 202 |
| 2-Carboxyethyl acrylate | 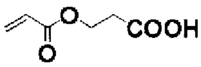 | 0.4 | 90.5 | 144 |
| 4-Hydroxybutyl acrylate (4-HBA) | 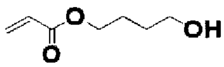 | 0.4 | 5.5 | 144 |
| 2-(2-Vinyloxyethoxy)ethyl acrylate (VEEA) | 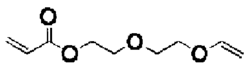 | 0.9 | 3.7 | 186 |
| 2-(Dimethylamino)ethyl acrylate | 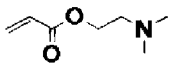 | 1.0 | 1.2 | 143 |
| 2-(2-Ethoxyethoxy)-ethyl acrylate | 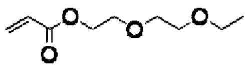 | 1.0 | 2.7 | 188 |
| Tetraethylene glycol diacrylate | 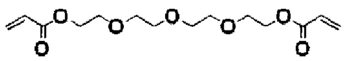 | 1.1 | 20.0 | 302 |
| Tetrahydrofurfuryl acrylate (THFA) | 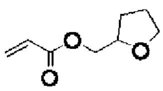 | 1.2 | 5.3 | 156 |
| Triethylene glycol diacrylate | 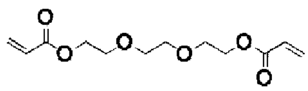 | 1.3 | 15.0 | 258 |
| N-Vinylcaprolactam (NVC) | 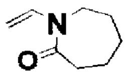 | 1.5 | - | 139 |

Table 2

| Name | Structural formula | ClogP value | Viscosity (mPa·s) | Molecular weight |
|---|---|---|---|---|
| Cyclic trimethylolpropane formal acrylate (CTFA) | 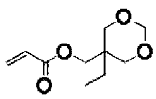 | 1.6 | 15.3 | 200 |

(continued)

| Name | Structural formula | ClogP value | Viscosity (mPa·s) | Molecular weight |
|---|---|---|---|---|
| (3-Ethyloxetan-3-yl)methyl acrylate (Oxe-10) | 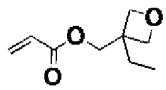 | 1.7 | 4.2 | 170 |
| Dipropylene glycol diacrylate (DPGDA) | 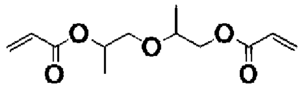 | 2.0 | 10.3 | 242 |
| (2-Methyl-2-ethyl-1,3-dioxolan-4-yl)methyl acrylate | 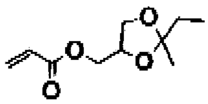 | 2.2 | 5.0 | 200 |
| Tripropylene glycol diacrylate (TPGDA) | 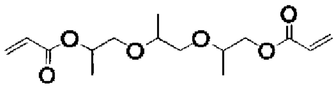 | 2.2 | 15.0 | 300 |
| 2-(Butylcarbamoyloxy)ethyl acrylate | 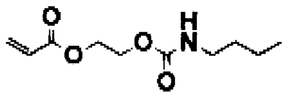 | 2.2 | 20.0 | 215 |

In the ink, the content of the polymerizable monomer A relative to the total amount of the ink is preferably 5% by mass or more, more preferably 10% by mass or more, still more preferably 20% by mass or more, particularly preferably 25% by mass or more. In view of the balance with other components, the content of the polymerizable monomer A relative to the total amount of the ink is preferably 98% by mass or less, more preferably 96% by mass or less, still more preferably 80% by mass or less, particularly preferably 70% by mass or less.

The polymerizable monomer A is hydrophilic and has the effect of decreasing the amount of dissolved oxygen in the ink. When the content of the polymerizable monomer A is 5% by mass or more, the effect of decreasing the amount of dissolved oxygen in the ink is further exhibited. Thus, when the content of the polymerizable monomer A is 5% by mass or more, higher curability is provided, and migration is further suppressed. In addition, when the content of the polymerizable monomer A is 5% by mass or more, the generation of white smoke upon irradiation with an electron beam is suppressed.

The ClogP value of the polymerizable monomer A is 2.3 or less. When the ClogP value of the polymerizable monomer is 2.3 or less, oxygen is less likely to dissolve in the ink, and the decrease in the amount of dissolved oxygen in the ink provides high curability and suppresses migration. In addition, when the ClogP value of the polymerizable monomer is 2.3 or less, the generation of white smoke upon irradiation with an electron beam is suppressed.

From the same viewpoint as above, the ClogP value of the polymerizable monomer A is preferably 2.0 or less, more preferably 1.5 or less, still more preferably 1.3 or less. The ClogP value of the polymerizable monomer A is preferably 0.3 or more, more preferably 1.0 or more.

When the ClogP value of the polymerizable monomer A is 0.3 or more, the surface tension of the polymerizable monomer itself does not become excessively high, and droplet interference is suppressed, thus providing good image quality.

The polymerizable monomer A preferably includes a polymerizable monomer having an ether structure in the molecule. The ether structure may be a chain ether structure or a cyclic ether structure, but is preferably a chain ether structure.

Examples of the polymerizable monomer having a chain ether structure in the molecule include polymerizable monomers including an ethylene oxide chain and polymerizable monomers including a propylene oxide chain. In particular, the polymerizable monomer A preferably includes a polymerizable monomer including an ethylene oxide chain, more preferably includes a polymerizable monomer including two or more ethylene oxide chains.

When the polymerizable monomer A includes an ethylene oxide chain, radicals are generated to accelerate the polymerization reaction. Thus, when the polymerizable monomer A includes a polymerizable monomer including two or more ethylene oxide chains, higher curability is provided, and migration is further suppressed. In addition, when the polymerizable monomer A includes a polymerizable monomer including two or more ethylene oxide chains, the generation of white smoke upon irradiation with an electron beam is suppressed.

In the polymerizable monomer including an ethylene oxide chain, the number of ethylene oxide chains (i.e., the number of moles of ethylene oxide chains added) is preferably 2 or more, more preferably 2 to 20, still more preferably 3 to

10, particularly preferably 3 to 6, from the viewpoint of further suppressing migration and further suppressing the generation of white smoke upon irradiation with an electron beam.

The polymerizable monomer including two or more ethylene oxide chains is preferably a polyfunctional (meth) acrylate including two or more ethylene oxide chains. That is, the polymerizable monomer A preferably includes a polyfunctional (meth)acrylate including two or more ethylene oxide chains. (Meth)acryloyl groups are highly reactive, and thus the polymerization reaction is further accelerated. Therefore, when the polymerizable monomer A includes a polyfunctional (meth)acrylate including two or more ethylene oxide chains, higher curability is provided, and migration is further suppressed.

In the polyfunctional (meth)acrylate including two or more ethylene oxide chains, the number of (meth)acryloyl groups is preferably 2 to 6, more preferably 2. That is, the polymerizable monomer A particularly preferably includes a polyfunctional (meth)acrylate including two or more (preferably 2 to 20, more preferably 3 to 10, still more preferably 3 to 6) ethylene oxide chains and having 2 to 6 (preferably 2) (meth)acryloyl groups.

The polymerizable monomer A according to the present invention comprises tetraethylene glycol diacrylate or triethylene glycol diacrylate and may preferably include triethylene glycol divinyl ether, 2-(2-vinyloxyethoxy)ethyl acrylate, 2-(2-ethoxyethoxy)-ethyl (meth)acrylate.

Polymerizable Monomer B Having ClogP Value of More Than 2.3 and Viscosity of 20 mPa·s or Less

The ink of the present disclosure may contain a polymerizable monomer other than the polymerizable monomer A. The polymerizable monomer other than the polymerizable monomer A is a polymerizable monomer having a ClogP value of more than 2.3.

The ink of the present disclosure preferably further includes a polymerizable monomer B having a ClogP value of more than 2.3 and a viscosity of 20 mPa·s or less. Hereinafter, the polymerizable monomer having a ClogP value of more than 2.3 and a viscosity of 20 mPa·s or less is also referred to simply as the "polymerizable monomer B".

The molecular weight of the polymerizable monomer B is preferably 600 or less, more preferably 300 or less. The lower limit of the molecular weight of the polymerizable monomer B is, for example, 100.

Specific examples of the polymerizable monomer having a ClogP value of more than 2.3 and a viscosity of 20 mPa·s or less include the following compounds. Table 3 shows compounds having a ClogP value of more than 2.3 and a viscosity of 20 mPa·s or less as well as the structural formulae, viscosities, and molecular weights of the compounds.

Table 3

| Name | Structural formula | ClogP value | Viscosity (mPa·s) | Molecular weight |
|---|---|---|---|---|
| Benzyl acrylate (BZA) | 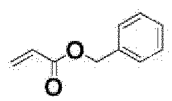 | 2.6 | 2.2 | 162 |
| Phenoxyethyl acrylate (PEA) | 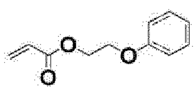 | 2.6 | 10.1 | 192 |
| 1,4-Dioxaspiro[4.5]dec-2-yl-methyl acrylate | 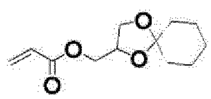 | 2.6 | 15.3 | 226 |
| Cyclohexyl acrylate | 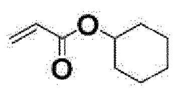 | 2.8 | 2.4 | 154 |
| 3-Methyl-1,5-pentanediol diacrylate (3MPDDA) | 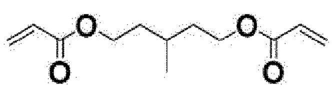 | 2.9 | 7.0 | 226 |
| 1,6-Hexanediol diacrylate | 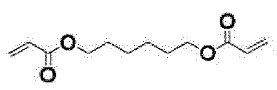 | 3.0 | 7.0 | 226 |
| Propoxylated (2) neopentyl glycol diacrylate | 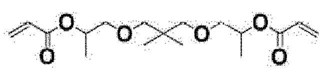 | 3.2 | 17.4 | 328 |

(continued)

| Name | Structural formula | ClogP value | Viscosity (mPa·s) | Molecular weight |
|---|---|---|---|---|
| Dicyclopentenyl acrylate | 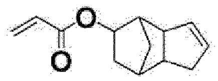 | 3.5 | 13.0 | 204 |
| Dicyclopentanyl acrylate | 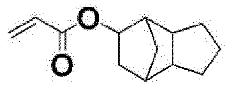 | 4.0 | 12.3 | 206 |
| Isooctyl acrylate | 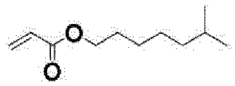 | 4.4 | 5.0 | 184 |
| 3,3,5-Trimethylcyclohexyl acrylate | 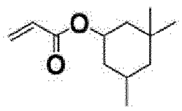 | 4.4 | 6.0 | 196 |
| Isobornyl acrylate | 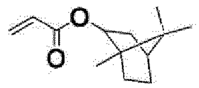 | 4.7 | 9.0 | 208 |
| t-Butylcyclohexyl acrylate | 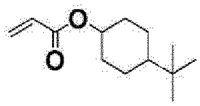 | 4.7 | 9.0 | 210 |
| 1,10-Decanediol diacrylate | 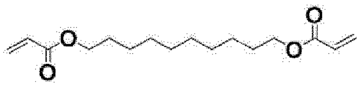 | 5.1 | 15.0 | 282 |
| Lauryl acrylate (LA) | 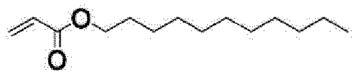 | 6.6 | 5.8 | 240 |

When the polymerizable monomer B is included in the ink, the spread of an ink film formed by applying the ink onto a substrate is facilitated, thus improving electron beam transmission, which results in high curability. Therefore, when the polymerizable monomer B is included in the ink together with the polymerizable monomer A, migration is further suppressed. In addition, when the polymerizable monomer B is included in the ink, the spread of an ink film formed by applying the ink onto a substrate is facilitated, thus providing a less grainy ink image.

The ClogP value of the polymerizable monomer B is not particularly limited as long as it is more than 2.3. From the viewpoint of further suppressing the generation of white smoke and migration, the ClogP value of the polymerizable monomer B is preferably 10 or less, more preferably 5 or less.

From the viewpoint of facilitating the spread of an ink film, the viscosity of the polymerizable monomer B is preferably 20 mPa·s or less, more preferably 10 mPa·s or less. The lower limit of the viscosity of the polymerizable monomer B is not particularly limited and is, for example, 1 mPa·s.

The viscosity of the polymerizable monomer B is measured at 25°C using a digital rotational viscometer, such as a TV-22 type viscometer manufactured by Toki Sangyo Co., Ltd.

The content of the polymerizable monomer B in the ink relative to the total amount of the ink is preferably 20% by mass to 80% by mass, more preferably 25% by mass to 70% by mass.

Other Polymerizable Monomer

The ink of the present disclosure may contain a polymerizable monomer other than the polymerizable monomer A and the polymerizable monomer B. The polymerizable monomer other than the polymerizable monomer A and the polymerizable monomer B is a polymerizable monomer having a ClogP value of more than 2.3 and a viscosity of more than 20 mPa·s.

Specific examples of the polymerizable monomer having a ClogP value of more than 2.3 and a viscosity of more than 20 mPa·s include the following compounds. Table 4 shows compounds having a ClogP value of more than 2.3 and a

viscosity of more than 20 mPa·s as well as the structural formulae, viscosities, and molecular weights of the compounds. The structural formula of caprolactone-modified hydroxypivalic acid neopentyl glycol diacrylate is omitted.

Table 4

| Name | Structural formula | ClogP value | Viscosity (mPa·s) | Molecular weight |
|---|---|---|---|---|
| Pentaerythritol triacrylate | 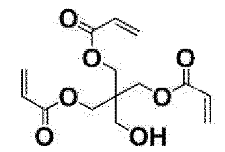 | 2.4 | 520 | 298 |
| Polypropylene glycol (400) diacrylate | 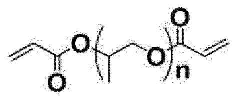 | 2.7 | 37.2 | 532 |
| Dicyclopentenyloxyethyl acrylate | 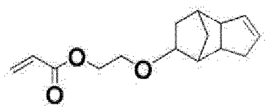 | 3.3 | 20.2 | 248 |
| Trimethylolpropane triacrylate (TMPTA) | 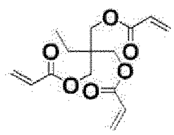 | 3.4 | 106 | 296 |
| Pentaerythritol tetraacrylate | 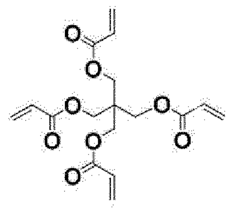 | 3.5 | 342 | 352 |
| Ethoxylated (3) trimethylolpropane triacrylate | 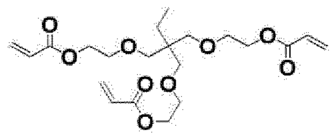 | 4.0 | 66.6 | 428 |
| Dipentaerythritol hexaacrylate (DPHA) | 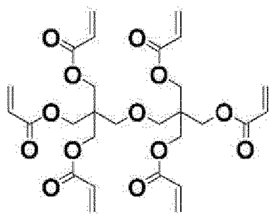 | 5.1 | 7800 | 578 |
| Caprolactone-modified hydroxypivalic acid neopentyl glycol diacrylate | - | 5.2 | 70.0 | 542 |

All Polymerizable Monomers

In the ink of the present disclosure, the weighted average of ClogP values of all polymerizable monomers included in the ink is preferably 0.9 to 2.5, more preferably 1.5 to 2.45. When the weighted average is 0.9 or more, a less grainy ink image is provided. When the weighted average is 2.5 or less, migration is suppressed, and the generation of white smoke upon irradiation with an electron beam is suppressed.

In the present disclosure, the weighted average of ClogP values is X determined by mathematical formula 1 below.

$$X = \Sigma S_i W_i / \Sigma W_i \qquad \text{(Mathematical formula 1)}$$

$S_i$ means a ClogP value of an i-th (i represents an integer of 1 or more) polymerizable monomer included in the ink. $W_i$ means a content (mass%) of the i-th polymerizable monomer included in the ink.

In the ink of the present disclosure, the content of a polymerizable monomer having a viscosity of 60 mPa·s or more relative to the total amount of the ink is preferably 20% by mass or less, more preferably 10% by mass or less. The lower limit of the content of a polymerizable monomer having a viscosity of 60 mPa·s or more is not particularly limited and is, for example, 0% by mass. That is, the ink of the present disclosure need not, preferably does not, contain a polymerizable monomer having a viscosity of 60 mPa·s or more.

When the content of a polymerizable monomer having a viscosity of 60 mPa·s or more is 20% by mass or less, the spread of an ink film formed by applying the ink onto a substrate is facilitated, thus improving electron beam transmission, which results in high curability. Consequently, migration is further suppressed. In addition, since the spread of an ink film formed by applying the ink onto a substrate is facilitated, a less grainy ink image is provided.

The viscosity of the polymerizable monomer is measured at 25°C using a digital rotational viscometer, such as a TV-22 type viscometer manufactured by Toki Sangyo Co., Ltd.

Surfactant

The ink of the present disclosure contains at least one surfactant.

The content of the surfactant is 0.3% by mass or more relative to the total amount of the ink. When the content of the surfactant is 0.3% by mass or more, the spread of an ink film formed by applying the ink onto a substrate is facilitated, thus improving electron beam transmission, and as a result, migration is suppressed. In addition, since the spread of an ink film formed by applying the ink onto a substrate is facilitated, a less grainy ink image is provided.

From the viewpoint of further suppressing migration and improving the image quality, the content of the surfactant relative to the total amount of the ink is preferably 1.0% by mass to 10% by mass, more preferably 1.2% by mass to 4.0% by mass.

The type of the surfactant is not particularly limited. The surfactant may be an anionic surfactant, a cationic surfactant, or a nonionic surfactant. Furthermore, the surfactant may be a silicone-based surfactant, an acrylic surfactant, or a fluorosurfactant. In particular, from the viewpoint of further suppressing migration and improving the image quality, the surfactant is preferably a silicone-based surfactant or an acrylic surfactant, more preferably a silicone-based surfactant.

The acrylic surfactant is a surfactant including a structure derived from an acrylic monomer. Examples of the acrylic surfactant include BYK361N, BYK350, BYK356, and BYK-UV3535 (manufactured by BYK).

The silicone-based surfactant is a surfactant including a siloxane structure. Examples of the silicone-based surfactant include BYK-UV3500, 3505, 3510, 3530, 3570, 3575, 3576, 3760, 378, 375, 306, 333, 377, 330, 307, 342, 302, 300, 331, 325, 320, 315N, 326, 322 (manufactured by BYK); TEGO Rad 2100, 2200, 2250, 2300, 2500, 2600, 2700, 2010; TEGO Glide 100, 110, 130, 406, 410, 411, 415, 420, 432, 435, 440, 450, 482, A115, B1484, ZG400; and TEGO Flow 300, 370, 425, ATF2, ZFS 460 (manufactured by Evonik Industries).

The fluorosurfactant is a surfactant including a perfluoroalkyl group. Examples of the fluorosurfactant include Megaface F-114, F-251, F-253, F-281, F-410, F-477, F-510, F-551, F-552, F-553, F-554, F-555, F-556, F-557, F-558, F-559, F-560, F-561, F-562, F-563, F-565, F-568, F-569, F-570, F-572, F-574, F-575, F-576, R-40, R-40-LM, R-41, R-94, RS-56, RS-72-K, RS-75, RS-76-E, RS-76-NS, RS-78, RS-90, and DS-21 (manufactured by DIC Corporation).

The surfactant may, but need not, have a polymerizable group. From the viewpoint of further suppressing migration, the surfactant preferably has a polymerizable group and is more preferably a silicone-based surfactant having a polymerizable group.

The polymerizable group of the surfactant is, for example, a (meth)acryloyl group.

In the present disclosure, when the surfactant has a polymerizable group, the surfactant has a molecular weight exceeding 1,000 and is distinguished from the above-described polymerizable monomers.

Color Material

The ink of the present disclosure may contain at least one color material.

The type of the color material is not particularly limited. The color material may be a pigment or a dye. From the viewpoint of light resistance, the color material is preferably a pigment.

When a pigment is used as the color material, the pigment can be incorporated in the ink in the form of a pigment dispersion liquid. The pigment dispersion liquid, which is a liquid obtained by dispersing a pigment in a liquid medium using a dispersing agent, includes at least a pigment, a dispersing agent, and a liquid medium. When a self-dispersible pigment is used as the pigment, the dispersing agent need not be incorporated in the ink.

The liquid medium is, for example, an organic solvent. The liquid medium may be any of the above-described polymerizable monomers incorporated in the ink.

The pigment may be any of commercially available organic pigments and inorganic pigments. The pigment may be an invisible pigment having infrared absorptivity.

When the ink of the present disclosure contains a color material, the content of the color material relative to the total amount of the ink is preferably 1% by mass to 20% by mass, more preferably 2% by mass to 10% by mass.

When the ink of the present disclosure is a clear ink for recording a clear image, the ink of the present disclosure may contain substantially no color materials. In this case, the color material content relative to the total amount of the ink may be less than 1% by mass, less than 0.1% by mass, or 0% by mass. The term "clear image" refers to an image that has a transmittance of 80% or more at wavelengths of 400 nm to 700 nm.

Dispersing Agent

The ink of the present disclosure, when containing a pigment as the color material, preferably contains at least one dispersing agent.

The dispersing agent may be a commonly known dispersing agent. From the viewpoint of dispersion stability, the dispersing agent is preferably a compound having both a hydrophilic structure and a hydrophobic structure.

Examples of the dispersing agent include low-molecular-weight dispersing agents having a molecular weight of less than 1,000, such as higher fatty acid salts, alkyl sulfates, alkyl ester sulfates, alkyl sulfonates, sulfosuccinates, naphthalene sulfonates, alkyl phosphates, polyoxyalkylene alkyl ether phosphates, polyoxyalkylene alkylphenyl ethers, polyoxyethylene polyoxypropylene glycols, glycerol fatty acid esters, sorbitan fatty acid esters, polyoxyethylene fatty acid amides, and amine oxides.

Other examples of the dispersing agent include high-molecular-weight dispersing agents having a molecular weight of 1,000 or more that are obtained by copolymerizing a hydrophilic monomer and a hydrophobic monomer. From the viewpoint of dispersion stability, the hydrophilic monomer is preferably a dissociable group-containing monomer, more preferably a dissociable group-containing monomer having a dissociable group and an ethylenically unsaturated bond. Examples of the dissociable group-containing monomer include carboxy group-containing monomers, sulfonic acid group-containing monomers, and phosphoric acid group-containing monomers. From the viewpoint of dispersion stability, the hydrophobic monomer is preferably an aromatic group-containing monomer having an aromatic group and an ethylenically unsaturated bond, or an aliphatic hydrocarbon group-containing monomer having an aliphatic hydrocarbon group and an ethylenically unsaturated bond. The polymer may be a random copolymer or a block copolymer.

The dispersing agent may be a commercially available product. Examples of the commercially available product include

DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, DISPERBYK-182 (manufactured by BYK Chemie GmbH); and

SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, SOLSPERSE 71000 (manufactured by Lubrizol Corporation).

The dispersing device for dispersing the pigment may be a known dispersing device, and examples thereof include ball mills, sand mills, bead mills, roll mills, jet mills, paint shakers, attritors, ultrasonic dispersing machines, and disper mixers.

In the ink, the ratio of the content of the dispersing agent to the content of the pigment (i.e., dispersing agent content/pigment content) on a mass basis is preferably 0.05 to 1.0, more preferably 0.1 to 0.8, from the viewpoint of dispersion stability.

Polymerization Initiator

The ink of the present disclosure may contain a polymerization initiator. When a polymerization initiator is contained, the content of the polymerization initiator relative to the total amount of the ink is preferably less than 1% by mass, more preferably less than 0.5% by mass, still more preferably less than 0.1% by mass. From the viewpoint of further suppressing migration, the ink of the present disclosure preferably does not contain a polymerization initiator. Among the components included in the ink, components that cause migration are the polymerizable monomers and the polymerization initiator. Therefore, when the content of the polymerization initiator is less than 1% by mass, migration can be

suppressed.

Examples of the polymerization initiator include alkylphenone compounds, acylphosphine compounds, aromatic onium salt compounds, organic peroxides, thio compounds, hexaarylbiimidazole compounds, ketoxime ester compounds, borate compounds, azinium compounds, metallocene compounds, active ester compounds, compounds having a carbon-halogen bond, and alkylamine compounds.

In particular, the polymerization initiator is preferably an acylphosphine compound.

Examples of the acylphosphine oxide compound include monoacylphosphine oxide compounds and bisacylphosphine oxide compounds.

Examples of monoacylphosphine oxide compounds include isobutyryldiphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyldiphenylphosphine oxide, benzoyldiphenylphosphine oxide, pivaloylphenylphosphinic acid vinyl ester, adipoylbisdiphenylphosphine oxide, pivaloyldiphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatile diphenylphosphine oxide, 2-methyl-2-ethylhexanoyldiphenylphosphine oxide, 1-methyl-cyclohexanoyldiphenylphosphine oxide, pivaloylphenylphosphinic acid methyl ester, and pivaloylphenylphosphinic acid isopropyl ester.

Examples of bisacylphosphine oxide compounds include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

In particular, the acylphosphine oxide compound is preferably bis(2,4,6-trimethylbenzoyl)phenylphosphine oxide (product name "Omnirad 819", manufactured by IGM Resins B.V), 2,4,6-trimethylbenzoyldiphenylphosphine oxide (product name "Omnirad TPO H", manufactured by IGM Resins B.V), or (2,4,6-trimethylbenzoyl)ethoxyphenylphosphine oxide (product name "Omnirad TPO-L", manufactured by IGM Resins B.V.).

## Other Components

The ink of the present disclosure may optionally contain other components in addition to the components described above. Examples of the other components include sensitizers, co-sensitizers, polymerization inhibitors, ultraviolet absorbers, antioxidants, anti-fading agents, electroconductive salts, organic solvents, and basic compounds.

## Physical Properties

For higher ejectability in application using an inkjet recording method, the pH of the ink is preferably 7 to 10, more preferably 7.5 to 9.5. The pH is measured at 25°C using a pH meter, such as a pH meter (model number "HM-31") manufactured by DKK-TOA Corporation.

The viscosity of the ink is preferably 0.5 mPa·s to 30 mPa·s, more preferably 2 mPa·s to 20 mPa·s, preferably 2 mPa·s to 15 mPa·s, still more preferably 3 mPa·s to 10 mPa·s. The viscosity is measured at 25°C using a viscometer, such as a TV-22 type viscometer manufactured by Toki Sangyo Co., Ltd.

The surface tension of the ink is preferably 60 mN/m or less, more preferably 20 mN/ m to 50 mN/m, still more preferably 25 mN/m to 45 mN/m. The surface tension is measured at 25°C using a surface tensiometer. For example, the surface tension is measured by a plate method using an automatic surface tensiometer (product name "CBVP-Z") manufactured by Kyowa Interface Science Co., Ltd.

## Relationship between Components

### Polymerizable monomer A/surfactant

The mass ratio of the content of the polymerizable monomer A to the content of the surfactant (i.e., polymerizable

monomer A/surfactant) is preferably 2 to 150, more preferably 4 to 100, still more preferably 5 to 50, particularly preferably 10 to 35. When this mass ratio is 2 to 150, migration is further suppressed, and an even less grainy ink image is provided.

Polymerizable monomer A/polymerizable monomer B

When the ink contains the polymerizable monomer B, the mass ratio of the content of the polymerizable monomer A to the content of the polymerizable monomer B (polymerizable monomer A/polymerizable monomer B) is preferably 0.1 to 4, more preferably 0.25 to 2.3, still more preferably 0.33 to 2.3. When this mass ratio is 0.1 or more, the generation of white smoke upon irradiation with an electron beam is further suppressed, and migration is further suppressed. When this mass ratio is 4 or less, migration is further suppressed, and an even less grainy ink image is provided.

Image Recording Method

The image recording method of the present disclosure preferably includes a step of forming an ink film by applying the ink onto a substrate (hereinafter referred to as the ink application step), and a step of irradiating the ink film with an electron beam (hereinafter referred to as the electron beam irradiation step).

The image recording method of the present disclosure may optionally include other steps.

As described above, the image recording method of the present disclosure uses the ink of the present disclosure. Therefore, according to the image recording method of the present disclosure, the same effects as those of the ink of the present disclosure are produced. Ink Application Step

In the ink application step, the ink is applied onto a substrate to form an ink film.

The type of the substrate is not particularly limited, and examples thereof include paper, paper laminated with plastics (e.g., polyethylene, polypropylene, and polystyrene), metal plates (e.g., plates of metals such as aluminum, zinc, and copper), plastic films (e.g., films of polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, and acrylic resin), paper laminated or deposited with the foregoing metals, and plastic films laminated or deposited with the foregoing metals.

The method of applying the ink is not particularly limited, and examples thereof include known methods such as a coating method, a dipping method, and an ink jet recording method. The coating method is performed using, for example, a bar coater, an extrusion coater, an air doctor coater, a blade coater, a rod coater, a knife coater, a squeeze coater, a reverse roll coater, a transfer roll coater, a gravure coater, a kiss roll coater, a cast coater, a spray coater, a curtain coater, or an extrusion coater.

The ink jet recording method may be any known method as long as images can be recorded. Examples of the ink jet recording method include a charge control method in which an ink is ejected using electrostatic attraction, a drop-on-demand method (pressure pulse method) in which vibration pressure of a piezoelectric element is used, an acoustic ink jet method in which an ink is irradiated with an acoustic beam converted from an electric signal and the ink is ejected using radiation pressure, and a thermal ink jet (Bubble Jet (registered trademark)) method in which an ink is heated to form bubbles and the pressure generated is used.

Examples of ink jet heads used in the ink jet recording method include a short serial head and a line head. The short serial head is used in a shuttle system in which recording is performed while scanning a substrate across its width with the head, and the line head, in which recording elements are arranged so as to correspond to the entire one side of a substrate, is used in a line system.

In the line system, a pattern can be formed on the entire surface of a substrate by scanning the substrate in a direction orthogonal to the direction in which recording elements are arranged, and any transport system for moving the short head, such as a carriage, is not necessary. Furthermore, in the line system, complicated scanning control of carriage movement and a substrate is not necessary and only the substrate moves, so that a higher recording speed than in the shuttle system can be achieved.

The volume of droplets of the ink ejected from an ink jet head is preferably 1 pL (picoliter) to 100 pL, more preferably 3 pL to 80 pL, still more preferably 3 pL to 50 pL. Electron Beam Irradiation Step

In the electron beam irradiation step, the ink film formed in the ink application step is irradiated with an electron beam.

In the electron beam irradiation step, the ink film is irradiated with an electron beam, thereby polymerizing the polymerizable monomers in the ink film to obtain an ink image. The irradiation with an electron beam can be carried out using an electron beam irradiation apparatus.

The conditions of the irradiation with an electron beam are not particularly limited. For example, the electron beam is applied at an acceleration voltage of 50 kV to 200 kV, a radiation dose of 10 kGy to 100 kGy, and a processing speed of 1 m/min to 200 m/min.

The irradiation with an electron beam may be carried out in an environment in which the oxygen concentration is

20% by volume or less (more preferably less than 20% by volume, still more preferably 5% by volume or less). With this environment, polymerization inhibition due to oxygen is suppressed, and migration is further suppressed.

The environment with an oxygen concentration of less than 20% by volume is preferably an environment in which an inert gas (e.g., nitrogen gas, argon gas, or helium gas) is present.

The amount of actinic ray exposure is not particularly limited and is, for example, 240 mJ/cm$^2$. Other Steps

In the image recording method of the present disclosure, two or more kinds of inks may be sequentially applied in the ink application step.

The two or more kinds of inks are preferably inks containing a polymerizable monomer, and more preferably, each of the inks is the ink of the present disclosure.

When each of the two or more kinds of inks is the ink of the present disclosure, the surfactant content in the ink applied later is preferably higher than the surfactant content in the ink applied earlier. The higher the surfactant content, the lower the surface tension of the ink. That is, when the content of a surfactant included in a second ink applied later is higher than the content of a surfactant included in a first ink applied earlier, the surface tension of the second ink is lower than the surface tension of the first ink. Thus, when the second ink is applied onto a first ink film, droplet interference is suppressed. This results in an ink image with higher image quality.

Therefore, in the step of forming an ink film in the image recording method of the present disclosure, preferably, n kinds of inks are sequentially applied, where n is an integer of 2 or more, and the surfactant content in the ink applied m-th is higher than the surfactant content in the ink applied (m - 1)-th, where m is an integer of 2 to n.

The ink applied earlier (i.e., the ink applied (m - 1)-th) and the ink applied later (i.e., the ink applied m-th) preferably have different hues. When the ink applied earlier and the ink applied later have different hues, a less grainy multicolor image can be recorded.

For example, when a black ink, a cyan ink, a magenta ink, a yellow ink, and a white ink are applied, preferably, the white ink is first applied onto a substrate to form a white ink film, the yellow ink is then applied onto the white ink film, the magenta ink is then applied onto the yellow ink film, the cyan ink is then applied onto the magenta ink film, and the black ink is then applied onto the cyan ink film.

Assuming that a white ink, a yellow ink, a magenta ink, a cyan ink, and a black ink are applied onto a substrate in this order, preferably, the content of a surfactant included in the yellow ink is higher than the content of a surfactant included in the white ink, the content of a surfactant included in the magenta ink is higher than the content of a surfactant included in the yellow ink, the content of a surfactant included in the cyan ink is higher than the content of a surfactant included in the magenta ink, and the content of a surfactant included in the black ink is higher than the content of a surfactant included in the cyan ink. The content of a surfactant means a content relative to the total amount of each ink.

The ink applied later may be applied so as to extend over the ink film formed of the ink applied earlier and a part of the substrate where the ink film is not formed.

The ink applied later need only be applied onto at least a part of the ink film formed of the ink applied earlier, and need not necessarily be applied over the entire ink film formed of the ink applied earlier.

The method of applying the ink applied later is the same as the method of applying the ink applied earlier, and preferred forms thereof are also the same.

## EXAMPLES

Hereinafter, Examples of the present disclosure will be described, but the present disclosure is not limited to the following Examples. Example 1 to Example 40 and Comparative Example 1 to Comparative Example 4

Example 34 is a reference example outside the scope of appended claims.

First, pigment dispersion liquids were prepared. Methods of preparing a black pigment dispersion liquid 1, a black pigment dispersion liquid 2, a cyan pigment dispersion liquid, a magenta pigment dispersion liquid, a yellow pigment dispersion liquid, and a white pigment dispersion liquid are as described below.

### Preparation of Black Pigment Dispersion Liquid 1

In a Motor Mill M50 disperser (manufactured by Eiger Machinery, Inc.), 25 parts by mass of a black pigment (C.I. Pigment Black 7), 70 parts by mass of tetraethylene glycol diacrylate (product name "SR268", manufactured by Sartomer), and 5 parts by mass of "SOLSPERSE 32000" were put and dispersed for 8 hours at a rotation speed of 9 m/s using zirconia beads having a diameter of 0.65 mm, thereby obtaining a black pigment dispersion liquid 1.

### Preparation of Black Pigment Dispersion Liquid 2

A Black pigment dispersion liquid 2 was obtained in the same manner as the black pigment dispersion liquid 1 except that tetraethylene glycol diacrylate was replaced with 3-methyl-1,5-pentanediol diacrylate (product name "SR341",

manufactured by Sartomer).

Cyan Pigment Dispersion Liquid

A cyan pigment dispersion liquid was obtained in the same manner as the black pigment dispersion liquid 1 except that the black pigment was replaced with a cyan pigment (C.I. Pigment Blue 15:4).

Magenta Pigment Dispersion Liquid

A magenta pigment dispersion liquid was obtained in the same manner as the black pigment dispersion liquid 1 except that the black pigment was replaced with a magenta pigment (C.I. Pigment Violet 19).

Yellow Pigment Dispersion Liquid

A yellow pigment dispersion liquid was obtained in the same manner as the black pigment dispersion liquid 1 except that the black pigment was replaced with a yellow pigment (C.I. Pigment Yellow 155).

White Pigment Dispersion Liquid

A white pigment dispersion liquid was obtained in the same manner as the black pigment dispersion liquid 1 except that the black pigment was replaced with a white pigment (C.I. Pigment White 6).

Next, the pigment dispersion liquids prepared and polymerizable monomers, a polymerization initiator, and surfactants shown in Table 5 to Table 8 given below were mixed such that the contents (mass%) of the components were as shown in Table 5 to Table 9. The mixtures were each stirred for 20 minutes using a mixer (product name "L4R", manufactured by Silverson) under the conditions of 25°C and 5,000 rotations/min to obtain inks.

In Example 1 to Example 35 and Comparative Example 2 to Comparative Example 4, the black pigment dispersion liquid 1 was used. In Comparative Example 1, the black pigment dispersion liquid 2 was used. In Example 41 and Example 42, the cyan pigment dispersion liquid was used. In Example 51 and Example 52, the magenta pigment dispersion liquid was used. In Example 61 and Example 62, the yellow pigment dispersion liquid was used. In Example 71, the white pigment dispersion liquid was used.

In Table 5 to Table 9, "Polymerizable monomer A/surfactant" means the mass ratio of the content of a polymerizable monomer A to the content of a surfactant. "Polymerizable monomer A/polymerizable monomer B" means the mass ratio of the content of a polymerizable monomer A to the content of a polymerizable monomer B. The weighted average of ClogP values of polymerizable monomers was calculated based on the ClogP values of all the polymerizable monomers included in each ink.

Details of the components shown in Table 5 to Table 9 are as follows.

Polymerizable Monomer A

· 4-HBA: 4-Hydroxybutyl acrylate (product name "4-HBA", manufactured by Osaka Organic Chemical Industry Ltd.)
· VEEA: 2-(2-Vinyloxyethoxy)ethyl acrylate (product name "VEEA", manufactured by Nippon Shokubai Co., Ltd.)
· Tetraethylene glycol diacrylate (product name "SR268", manufactured by Sartomer) · Triethylene glycol diacrylate (product name "SR272", manufactured by Sartomer) · 2-(Butylcarbamoyloxy)ethyl acrylate (product name "Genomer 1122", manufactured by Rahn)

Polymerizable Monomer B

· 3MPDDA: 3-Methyl-1,5-pentanediol diacrylate (product name "SR341", manufactured by Sartomer)
· LA: Lauryl acrylate (product name "SR335", manufactured by Sartomer)

Other Polymerizable Monomer

· Caprolactone-modified hydroxypivalic acid neopentyl glycol diacrylate (product name "KAYARAD HX220", manufactured by Nippon Kayaku Co., Ltd.)

Polymerization Initiator

· Ominirad 819: Bis(2,4,6-trimethylbenzoyl)phenylphosphine oxide (manufactured by IGM Resins B.V.)

Black Pigment

· C.I. Pigment Black 7

Cyan Pigment

· C.I. Pigment Blue 15:4

Magenta Pigment

· C.I. Pigment Violet 19

Yellow Pigment

· C.I. Pigment Yellow 155

White Pigment

· C.I. Pigment White 6

Dispersing Agent

· SOLSPERSE 32000: Polyethyleneimine polymer (manufactured by Lubrizol Corporation)

Surfactant

- · Acrylic surfactant having polymerizable group: product name "BYK-UV3535", manufactured by BYK
- · Acrylic surfactant having no polymerizable group: product name "BYK-361N", manufactured by BYK
- · Silicone-based surfactant 1 having no polymerizable group: product name "BYK-378", manufactured by BYK
- · Silicone-based surfactant 2 having no polymerizable group: product name "BYK-3760", manufactured by BYK
- · Silicone-based surfactant 3 having no polymerizable group: product name "TEGO (registered trademark) Glide 450", manufactured by Evonik Industries
- · Silicone-based surfactant 4 having no polymerizable group: product name "TEGO (registered trademark) Glide 432", manufactured by Evonik Industries
- · Silicone-based surfactant 1 having polymerizable group: product name "TEGO (registered trademark) Rad 2010", manufactured by Evonik Industries
- · Silicone-based surfactant 2 having polymerizable group: product name "TEGO (registered trademark) Rad 2500", manufactured by Evonik Industries
- · Silicone-based surfactant 3 having polymerizable group: product name "TEGO (registered trademark) Rad 2700", manufactured by Evonik Industries
- · Fluorosurfactant having polymerizable group: product name "Megaface RS-76-NS", manufactured by DIC Corporation

Image Recording

An image was recorded on a substrate (product name "Viewful UV TP-188N", manufactured by Kimoto Co., Ltd.) using an ink jet recording apparatus having piezoelectric ink jet nozzles. The ink supply system was constituted by a stock tank, a supply pipe, an ink supply tank disposed immediately upstream of an ink jet head, a filter, and a piezoelectric ink jet head, and thermal insulation and warming were performed from the ink supply tank to the ink jet head portion. Temperature sensors were disposed near the ink supply tank and the nozzles of the ink jet head, and temperature control was performed so as to keep the nozzle portion at 50°C $\pm$ 2°C. The piezoelectric ink jet head was driven so as to eject multi-size dots of 1 to 60 pL (picoliters) at a resolution of 1,200 $\times$ 1,200 dpi. Here, dpi refers to the number of dots per 2.54 cm. The ink was

ejected to record a solid image of 20 cm × 20 cm. Thereafter, using an electron beam irradiation apparatus (manufactured by Iwasaki Electric Co., Ltd.), the solid image was irradiated with an electron beam at an acceleration voltage of 90 kV, a radiation dose of 30 kGy, a processing speed of 5 m/min, and an oxygen concentration of 300 ppm or less to obtain an image recorded product.

Using the image recorded product obtained, migration and image quality were evaluated. In addition, the generation of white smoke upon irradiation with an electron beam was evaluated. The evaluation results are shown in Table 5 to Table 9.

Migration

A circle having a diameter of 10 cm was cut out from the image recorded product. A non-oriented polypropylene substrate (model number "FHK2-L", manufactured by Futamura Chemical Co., Ltd., 20 μm thick) was laminated on the ink image of the cut-out image recorded product. The laminate was placed in a migration tester, and 95 mass% ethanol was used as an extracting solvent. After a test was carried out at 40°C for 10 days, the polymerizable monomers included in the ink used for the image recorded product were measured for their content in ethanol. When the polymerization initiator was also included in the ink, the polymerizable monomers and the polymerization initiator were measured for their content in ethanol. The evaluation criteria are as follows. When the polymerizable monomers and the polymerization initiator were evaluated at different ranks, the lower rank was adopted. Rank 5 means that migration is suppressed most.

5: None of the components were detected.
4: The content of a component detected most among the polymerizable monomers was less than 5 ppb, or the content of a component detected most among the polymerization initiator was less than 10 ppb.
3: The content of a component detected most among the polymerizable monomers was 5 ppb or more and less than 10 ppb, or the content of a component detected most among the polymerization initiator was 10 ppb or more and less than 100 ppb.
2: The content of a component detected most among the polymerizable monomers was 10 ppb or more and less than 20 ppb, or the content of a component detected most among the polymerization initiator was 100 ppb or more and less than 500 ppb.
1: The content of a component detected most among the polymerizable monomers was 20 ppb or more, or the content of a component detected most among the polymerization initiator was 500 ppb or more.

Image Quality (Graininess)

The ink image of the image recorded product was visually observed and evaluated for graininess. The evaluation criteria are as follows. Rank 5 means that the image quality is highest.

5: The image had no grain at all and was uniform.
4: The image slightly had minute grain but was substantially uniform as a whole.
3: The image had minute grain.
2: The image had much and noticeable grain.
1: The image had much grain with strong shading and was ununiform.

Generation of White Smoke

During exposure using an electron beam, how white smoke was generated was visually observed. When the generation of white smoke was not observed, the presence of stains on the electron beam irradiation apparatus was visually observed. The evaluation criteria are as follows. Rank 5 means that the generation of white smoke is suppressed most.

5: The generation of white smoke was not observed, and the electron beam irradiation apparatus was not stained.
4: The generation of white smoke was not observed, but the electron beam irradiation apparatus was slightly stained.
3: The generation of white smoke was slightly observed.
2: White smoke was generated.
1: Much white smoke was generated.

Table 5

| | Name | ClogP value | Viscosity (mPa·s) | Molecular weight | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|
| Polymerizable monomer A | 4-HBA | 0.4 | 6 | 144 | 90.0 | - | - | - | - | - | - | - | - | - | - | - |
| | VEEA | 0.9 | 4 | 187 | - | 90.0 | - | - | - | - | - | - | - | - | - | - |
| | Tetraethylene glycol diacrylate | 1.1 | 20 | 302 | 6.3 | 6.3 | 96.3 | 6.3 | 6.3 | 6.3 | 6.3 | 6.3 | 6.3 | 6.3 | 6.3 | 6.3 |
| | Triethylene glycol diacrylate | 1.3 | 15 | 258 | - | - | - | 90.0 | 90.0 | 90.0 | 90.0 | 90.0 | 90.0 | 90.0 | 90.0 | 90.0 |
| Black pigment | | | | | 2.25 | 2.25 | 2.25 | 2.25 | 2.25 | 2.25 | 2.25 | 2.25 | 2.25 | 2.25 | 2.25 | 2.25 |
| Dispersing agent | SOLSPERSE 32000 | | | | 0.45 | 0.45 | 0.45 | 0.45 | 0.45 | 0.45 | 0.45 | 0.45 | 0.45 | 0.45 | 0.45 | 0.45 |
| Surfactant | Acrylic surfactant having polymerizable group | | | | - | - | - | - | 1.0 | - | - | - | - | - | - | - |
| | Acrylic surfactant having no polymerizable group | | | | - | - | - | - | - | 1.0 | - | - | - | - | - | - |
| | Silicone-based surfactant 1 having no polymerizable group | | | | - | - | - | - | - | - | 1.0 | - | - | - | - | - |
| | Silicone-based surfactant 2 having no polymerizable group | | | | - | - | - | - | - | - | - | 1.0 | - | - | - | - |
| | Silicone-based surfactant 3 having no polymerizable group | | | | - | - | - | - | - | - | - | - | 1.0 | - | - | - |
| | Silicone-based surfactant 4 having no polym erizable group | | | | - | - | - | - | - | - | - | - | - | 1.0 | - | - |
| | Silicone-based surfactant 1 having polym erizable group | | | | - | - | - | - | - | - | - | - | - | - | 1.0 | - |
| | Silicone-based surfactant 2 having polymerizable group | | | | 1.0 | 1.0 | 1.0 | 1.0 | - | - | - | - | - | - | - | - |
| | Silicone-based surfactant 3 having polymerizable group | | | | - | - | - | - | - | - | - | - | - | - | - | 1.0 |
| Polymerizable monomer A/surfactant | | | | | 96.3 | 96.3 | 96.3 | 96.3 | 96.3 | 96.3 | 96.3 | 96.3 | 96.3 | 96.3 | 96.3 | 96.3 |
| Weighted average of ClogP values of polymerizable monomers | | | | | 0.45 | 0.91 | 1.10 | 1.29 | 1.29 | 1.29 | 1.29 | 1.29 | 1.29 | 1.29 | 1.29 | 1.29 |

(continued)

| | Name | ClogP value | Viscosity (mPa·s) | Molecular weight | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|
| Evaluation | Migration | | | | 3 | 3 | 4 | 4 | 4 | 3 | 4 | 4 | 4 | 4 | 4 | 4 |
| | White smoke | | | | 5 | 5 | 5 | 5 | 5 | 5 | 5 | 5 | 5 | 5 | 5 | 5 |
| | Image quality | | | | 3 | 4 | 4 | 4 | 3 | 3 | 4 | 4 | 4 | 4 | 4 | 4 |

Table 6

| | Name | ClogP value | Viscosity (mPa·s) | Molecular weight | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|---|
| Polymerizable monomer A | Tetraethylene glycol diacrylate | 1.1 | 20 | 302 | 6.3 | 6.3 | 6.3 | 6.3 | 6.3 | 76.3 | 16.3 | 21.3 | 26.3 | 46.3 |
| | Triethylene glycol diacrylate | 1.3 | 15 | 258 | - | - | - | 65.0 | 75.0 | - | - | - | - | - |
| | 2-(Butylcarbamoyloxy) ethyl acrylate | 2.2 | 20 | 215 | 90.0 | - | - | - | - | - | - | - | - | - |
| Polymerizable monomer B | 3MPDDA | 2.9 | 6 | 226 | - | 90.0 | - | - | | 20.3 | 80.0 | 75.0 | 70.0 | 50.0 |
| | LA | 6.6 | 6 | 240 | - | - | 90.0 | - | - | - | - | - | - | - |
| Other polymerizable monomer | Caprolactone-modified hydroxypivalic acid neopentyl glycol diacrylate | 5.2 | 70 | 542 | - | - | - | 25.0 | 15.0 | - | - | - | - | - |
| Black pigment | | | | | 2.25 | 2.25 | 2.25 | 2.25 | 2.25 | 2.25 | 2.25 | 2.25 | 2.25 | 2.25 |
| Dispersing agent | SOLSPERSE 32000 | | | | 0.45 | 0.45 | 0.45 | 0.45 | 0.45 | 0.45 | 0.45 | 0.45 | 0.45 | 0.45 |
| Surfactant | Silicone-based surfactant 2 having polymerizable group | | | | 1.0 | 1.0 | 1.0 | 1.0 | 1.0 | 0.7 | 1.0 | 1.0 | 1.0 | 1.0 |
| Polymerizable monomer A/surfactant | | | | | 96.3 | 6.3 | 6.3 | 71.3 | 81.3 | 109 | 16.3 | 21.3 | 26.3 | 46.3 |
| Polymerizable monomer A/polymerizable monomer B | | | | | - | 0.1 | 0.1 | - | - | - | 0.2 | 0.3 | 0.4 | 0.9 |
| Weighted average of ClogP values of polymerizable monomers | | | | | 2.13 | 2.78 | 6.24 | 2.30 | 1.89 | 1.48 | 2.60 | 2.50 | 2.41 | 2.03 |
| Evaluation | Migration | | | | 3 | 3 | 3 | 3 | 3 | 4 | 3 | 4 | 5 | 5 |
| | White smoke | | | | 4 | 3 | 3 | 4 | 4 | 5 | 3 | 4 | 5 | 5 |
| | Image quality | | | | 4 | 5 | 5 | 3 | 4 | 3 | 5 | 5 | 5 | 5 |

Table 7

| | Name | ClogP value | Viscosity (mPa·s) | Molecular weight | Example 23 | Example 24 | Example 25 | Example 26 | Example 27 | Example 28 | Example 29 | Example 30 | Example 31 | Example 32 | Example 33 |
|---|---|---|---|---|---|---|---|---|---|---|---|---|---|---|---|
| Polymerizable monomer A | Tetraethylene glycol diacrylate | 1.1 | 20 | 302 | 56.3 | 76.3 | 21.3 | 21.3 | 21.3 | 21.3 | 21.3 | 21.3 | 21.3 | 46.3 | 46.3 |
| Polymerizable monomer B | 3MPDDA | 2.9 | 6 | 226 | 40.0 | 20.0 | 75.7 | 74.5 | 73.0 | 71.0 | 65.5 | 70.0 | 50.0 | 49.0 | 47.4 |
| Other polymerizable monomer | Caprolactone-modified hydroxypivalic acid neopentyl glycol diacrylate | 5.2 | 70 | 542 | - | - | - | - | - | - | - | 5 | 25 | - | - |
| Black pigment | | | | | 2.25 | 2.25 | 2.25 | 2.25 | 2.25 | 2.25 | 2.25 | 2.25 | 2.25 | 2.25 | 2.25 |
| Dispersing agent | SOLSPERSE 32000 | | | | 0.45 | 0.45 | 0.45 | 0.45 | 0.45 | 0.45 | 0.45 | 0.45 | 0.45 | 0.45 | 0.45 |
| Surfactant | Silicone-based surfactant 2 having polymerizable group | | | | 1.0 | 1.0 | 0.3 | 1.5 | 3.0 | 5.0 | 10.5 | 1.0 | 1.0 | 2.0 | 3.6 |
| Polymerizable monomer A/surfactant | | | | | 56.3 | 76.3 | 71.0 | 14.2 | 7.1 | 4.3 | 2.0 | 21.3 | 21.3 | 23.2 | 12.9 |
| Polymerizable monomer A/polymerizable monomer B | | | | | 1.4 | 3.8 | 0.3 | 0.3 | 0.3 | 0.3 | 0.3 | 0.3 | 0.4 | 0.9 | 1.0 |
| Weighted average of ClogP values of polymerizable monomers | | | | | 1.85 | 1.47 | 2.50 | 2.50 | 2.49 | 2.48 | 2.46 | 2.62 | 3.10 | 2.03 | 2.01 |
| Evaluation | Migration | | | | 5 | 4 | 3 | 4 | 4 | 4 | 3 | 3 | 3 | 5 | 5 |
| | White smoke | | | | 5 | 5 | 4 | 4 | 4 | 4 | 4 | 4 | 3 | 5 | 5 |
| | Image quality | | | | 5 | 4 | 4 | 5 | 5 | 4 | 3 | 4 | 4 | 5 | 5 |

Table 8

| | Name | ClogP value | Viscosity (mPa·s) | Molecular weight | Example 34 | Example 35 |
|---|---|---|---|---|---|---|
| Polymerizable monomer A | Tetraethylene glycol diacrylate | 1.1 | 20 | 302 | - | 6.3 |
| | Triethylene glycol diacrylate | 1.3 | 15 | 258 | - | 90.0 |
| | VEEA | 0.9 | 20 | 187 | 96.3 | - |
| Black pigment | | | | | 2.25 | 2.25 |
| Dispersing agent | SOLSPERSE 32000 | | | | 0.45 | 0.45 |
| Surfactant | Silicone-based surfactant 2 having polymerizable group | | | | 1.0 | - |
| | Fluorosurfactant having polymerizable group | | | | - | 1.0 |
| Polymerizable monomer A/surfactant | | | | | 96.3 | 96.3 |
| Polymerizable monomer A/polymerizable monomer B | | | | | - | - |
| Weighted average of ClogP values of polymerizable monomers | | | | | 0.90 | 1.29 |
| Evaluation | Migration | | | | 3 | 4 |
| | White smoke | | | | 5 | 5 |
| | Image quality | | | | 4 | 3 |

Table 9

| | Name | ClogP value | Viscosity (mPa·s) | Molecular weight | Example 41 | Example 42 | Example 51 | Example 52 | Example 61 | Example 62 | Example 71 | Comparative Example 1 | Comparative Example 2 | Comparative Example 3 | Comparative Example 4 |
|---|---|---|---|---|---|---|---|---|---|---|---|---|---|---|---|
| Polymerizable monomer A | Tetraethylene glycol diacrylate | 1.1 | 20 | 302 | 46.3 | 46.3 | 46.3 | 46.3 | 46.3 | 46.3 | 61.0 | - | 26.3 | 97.3 | 26.3 |
| Polymeri zable monomer B | 3MPDDA | 2.9 | 6 | 226 | 49.0 | 47.8 | 49.0 | 48.2 | 49.0 | 48.6 | 28.0 | 96.3 | 70.8 | - | 69.0 |
| Polymerization initiator | Omnirad 819 | | | | - | - | - | - | - | - | - | - | - | - | 1 |
| Black pigment | | | | | - | - | - | - | - | - | - | 2.25 | 2.25 | 2.25 | 2.25 |
| Cyan pigment | | | | | 2.25 | 2.25 | - | - | - | - | - | - | - | - | - |
| Magenta pigment | | | | | - | - | 2.25 | 2.25 | - | - | - | - | - | - | - |
| Yellow pigment | | | | | - | - | - | - | 2.25 | 2.25 | - | - | - | - | - |
| White pigment | | | | | - | - | - | - | - | - | 7.5 | - | - | - | - |
| Dispersing agent | SOLSPERSE 32000 | | | | 0.45 | 0.45 | 0.45 | 0.45 | 0.45 | 0.45 | 1.50 | 0.45 | 0.45 | 0.45 | 0.45 |
| Surfactant | Silicone-based surfactant 2 having polymerizable group | | | | 2.0 | 3.2 | 2.0 | 2.8 | 2.0 | 2.4 | 2.0 | 1.0 | 0.2 | - | 1.0 |
| Polimerizable monomer A/surfactant | | | | | 23.2 | 14.5 | 23.2 | 16.5 | 23.2 | 19.3 | 30.5 | 6 | 132 | - | 26.3 |
| Polymerizable monomer A/polymerizable monomer B | | | | | 0.9 | 1.0 | 0.9 | 1.0 | 0.9 | 1.0 | 1.1 | 0 | 0.4 | - | 0.4 |
| Weighted average of ClogP values of polymerizable monomers | | | | | 2.03 | 2.01 | 2.03 | 2.02 | 2.03 | 2.02 | 1.67 | 2.90 | 2.41 | 1.10 | 2.41 |
| Evaluation | Migration | | | | 5 | 5 | 5 | 5 | 5 | 5 | 5 | 2 | 2 | 2 | 1 |
| | White smoke | | | | 5 | 5 | 5 | 5 | 5 | 5 | 5 | 2 | 5 | 5 | 5 |
| | Image quality | | | | 5 | 5 | 5 | 5 | 5 | 5 | 5 | 5 | 2 | 1 | 5 |

In Example 1 to Example 35, Example 41, Example 42, Example 51, Example 52, Example 61, Example 62, and Example 71, since one or more polymerizable monomers A having a ClogP value of 2.3 or less and a surfactant were contained, and the content of the surfactant was 0.3% by mass or more relative to the total amount of the electron beam curable ink and the content of the polymerization initiator was less than 1% by mass relative to the total amount of the electron beam curable ink, migration was suppressed.

In Comparative Example 1, since no polymerizable monomer A was included, migration was not suppressed, and white smoke was generated upon irradiation with an electron beam.

In Comparative Example 2, since the content of the surfactant was 0.2% by mass, migration was not suppressed, and the image quality was poor.

In Comparative Example 3, since no surfactant was included, migration was not suppressed, and the image quality was poor.

In Comparative Example 4, since the content of the polymerization initiator was 1% by mass, migration was not suppressed.

In Example 20, since the content of the polymerizable monomer A was 20% by mass or more, migration was suppressed and the generation of white smoke upon irradiation with an electron beam was suppressed compared with Example 19.

In Example 24, since the mass ratio of the content of the polymerizable monomer A to the content of the surfactant was 100 or less, the image quality was high compared with Example 18.

In Example 28, since the mass ratio of the content of the polymerizable monomer A to the content of the surfactant was 4 or more, migration was suppressed and the image quality was high compared with Example 29.

In Example 20, since the mass ratio of the content of the polymerizable monomer A to the content of the polymerizable monomer B was 0.25 or more, migration was suppressed and the generation of white smoke upon irradiation with an electron beam was suppressed compared with Example 19. In Example 23, since the mass ratio of the content of the polymerizable monomer A to the content of the polymerizable monomer B was 2.3 or less, migration was suppressed and the image quality was high compared with Example 24.

In Example 4, since the ClogP value of the polymerizable monomer A was 1.5 or less, migration was suppressed and the generation of white smoke upon irradiation with an electron beam was suppressed compared with Example 13.

In Examples 2 to 4, since the polymerizable monomer A included a polymerizable monomer including two or more ethylene oxide chains, the image quality was high compared with Example 1.

In Examples 3 and 4, since the polymerizable monomer A included a polyfunctional (meth)acrylate including two or more ethylene oxide chains, migration was further suppressed compared with Example 2.

In Example 17, since the content of the polymerizable monomer having a viscosity of 60 mPa·s or more was 20% by mass or less, the image quality was high compared with Example 16.

In Example 4 and Examples 7 to 12, since the surfactant was a silicone-based surfactant, the image quality was high compared with Example 5 and Example 6, and migration was suppressed compared with Example 35.

In Example 24, since the content of the surfactant was 1.0% by mass or more, migration was suppressed and the image quality was high compared with Example 18. In Example 28, since the content of the surfactant was 10% by mass or less, migration was suppressed and the image quality was high compared with Example 29.

In Example 2, since the weighted average of ClogP values of all the polymerizable monomers included in the ink was 0.9 or more, the image quality was high compared with Example 1. In Example 13, since the weighted average of ClogP values of all the polymerizable monomers included in the ink was 2.5 or less, the generation of white smoke upon irradiation with an electron beam was suppressed compared with Example 14.

Example 101 and Example 102

To record a multicolor image, image recording was performed using some of the inks prepared in the above Examples.

Image Recording

In Example 101, the white ink of Example 71 was ejected onto a substrate to record a solid image of 20 cm × 20 cm. Thereafter, using an electron beam irradiation apparatus (manufactured by Iwasaki Electric Co., Ltd.), the solid image was irradiated with an electron beam at an acceleration voltage of 90 kV, a radiation dose of 30 kGy, a processing speed of 5 m/min, and an oxygen concentration of 300 ppm or less. Next, the yellow ink of Example 61, the magenta ink of Example 51, the cyan ink of Example 41, and the black ink of Example 33 were ejected in this order, and after the ejection, the resulting product was irradiated with an electron beam in the same manner as the irradiation after the ejection of the white ink to obtain an image recorded product.

In Example 102, the white ink of Example 71, the yellow ink of Example 62, the magenta ink of Example 52, the

cyan ink of Example 42, and the black ink of Example 34 were ejected in this order, and after the ejection, the resulting product was irradiated with an electron beam in the same manner as in Example 101 to obtain an image recorded product.

Using the image recorded products obtained, the evaluation of image quality was performed in the same manner as the above evaluation of image quality. The evaluation results are shown in Table 10.

Table 10

| | | | | | Example 101 | | | | | Example 102 | | | | |
|---|---|---|---|---|---|---|---|---|---|---|---|---|---|---|
| | Name | ClogP value | Viscosity (mPa·s) | Molecular weight | Example 71 | Example 61 | Example 51 | Example 41 | Example 33 | Example 71 | Example 62 | Example 52 | Example 42 | Example 34 |
| Polymerizable monomer A | Tetraethylene glycol diacrylate | 1.1 | 20 | 302 | 61.0 | 46.3 | 46.3 | 46.3 | 46.3 | 61.0 | 46.3 | 46.3 | 46.3 | 46.3 |
| Polymerizable monomer B | 3MPDDA | 2.9 | 6 | 226 | 28.0 | 49.0 | 49.0 | 49.0 | 49.0 | 28.0 | 48.6 | 48.2 | 47.8 | 47.4 |
| Polymerization initiator | Omnirad 819 | | | | - | - | - | - | - | - | - | - | - | - |
| Black pigment | | | | | - | - | - | - | 2.25 | - | - | - | - | 2.25 |
| Cyan pigment | | | | | - | - | - | 2.25 | - | - | - | - | 2.25 | - |
| Magenta pigment | | | | | - | - | 2.25 | - | - | - | - | 2.25 | - | - |
| Yellow pigment | | | | | - | 2.25 | - | - | - | - | 2.25 | - | - | - |
| White pigment | | | | | 7.5 | - | - | - | - | 7.5 | - | - | - | - |
| Dispersing agent | SOLSPERSE 32000 | | | | 1.50 | 0.45 | 0.45 | 0.45 | 0.45 | 1.50 | 0.45 | 0.45 | 0.45 | 0.45 |
| Surfactant | Silicone-based surfactant 2 having polymerizable group | | | | 2.0 | 2.0 | 2.0 | 2.0 | 2.0 | 2.0 | 2.4 | 2.8 | 3.2 | 3.6 |
| Evaluation | Image quality | | | | 3 | | | | | 5 | | | | |

As shown in Table 10, in Example 102, since the surfactant content in the ink applied later was higher than the surfactant content in the ink applied earlier, the image quality was high compared with Example 101.

## Claims

1. An electron beam curable ink comprising;

   a polymerizable monomer A having a ClogP value of 2.3 or less, wherein the ClogP value is calculated using the fragment method using ChemDraw Professional 16; and
   a surfactant,
   wherein a content of the surfactant is 0.3% by mass or more relative to a total amount of the electron beam curable ink, and
   a content of a polymerization initiator is less than 1% by mass relative to the total amount of the electron beam curable ink, **characterized in that**
   the polymerizable monomer A comprises at least one selected from the group consisting of triethylene glycol diacrylate and tetraethylene glycol diacrylate.

2. The electron beam curable ink according to claim 1, wherein a content of the polymerizable monomer A is 20% by mass or more relative to the total amount of the electron beam curable ink.

3. The electron beam curable ink according to claim 1 or 2, wherein a mass ratio of a content of the polymerizable monomer A to the content of the surfactant is 4 to 100.

4. The electron beam curable ink according to any one of claims 1 to 3, further comprising a polymerizable monomer B having a ClogP value of more than 2.3 and a viscosity of 20 mPa·s or less.

5. The electron beam curable ink according to claim 4, wherein a mass ratio of a content of the polymerizable monomer A to a content of the polymerizable monomer B is 0.25 to 2.3.

6. The electron beam curable ink according to any one of claims 1 to 5, wherein the polymerizable monomer A has a ClogP value of 1.5 or less.

7. The electron beam curable ink according to any one of claims 1 to 6, wherein a content of a polymerizable monomer having a viscosity of 60 mPa·s or more at 25°C is 20% by mass or less relative to the total amount of the electron beam curable ink.

8. The electron beam curable ink according to any one of claims 1 to 7, wherein the surfactant is a silicone-based surfactant.

9. The electron beam curable ink according to any one of claims 1 to 8, wherein the content of the surfactant is 1.0% by mass to 10% by mass relative to the total amount of the electron beam curable ink.

10. The electron beam curable ink according to any one of claims 1 to 9, wherein a weighted average of ClogP values of all polymerizable monomers included in the ink is 0.9 to 2.5.

11. The electron beam curable ink according to any ony of claims 1 to 10, wherein the surfactant is a surfactant having a polymerizable group.

12. An image recording method comprising:

    a step of forming an ink film by applying the electron beam curable ink according to any one of claims 1 to 11 onto a substrate; and
    a step of irradiating the ink film with an electron beam.

13. The image recording method according to claim 12, wherein:

    the step of forming of the ink film comprises sequentially applying n kinds of the electron beam curable ink, where n

is an integer of 2 or more, and
a surfactant content in the electron beam curable ink applied m-th is higher than a surfactant content in the electron beam curable ink applied (m - 1)-th, where m is an integer of 2 to n.

**Patentansprüche**

1. Elektronenstrahlhärtbare Tinte, umfassend:

   ein polymerisierbares Monomer A mit einem ClogP-Wert von 2,3 oder weniger, wobei der ClogP-Wert unter Verwendung des Fragmentverfahrens unter Verwendung von ChemDraw Professional 16 berechnet wird; und ein Tensid,
   wobei ein Gehalt des Tensids 0,3 Massen-% oder mehr relativ zu einer Gesamtmenge der elektronenstrahlhärtbaren Tinte beträgt, und
   ein Gehalt eines Polymerisationsinitiators weniger als 1 Massen-% relativ zu der Gesamtmenge der elektronenstrahlhärtbaren Tinte beträgt, **dadurch gekennzeichnet, dass**
   das polymerisierbare Monomer A mindestens eines, das aus der Gruppe, die aus Triethylenglykoldiacrylat und Tetraethylenglykoldiacrylat besteht, ausgewählt wird, umfasst.

2. Elektronenstrahlhärtbare Tinte nach Anspruch 1, wobei ein Gehalt des polymerisierbaren Monomers A 20 Massen-% oder mehr relativ zu der Gesamtmenge der elektronenstrahlhärtbaren Tinte beträgt.

3. Elektronenstrahlhärtbare Tinte nach Anspruch 1 oder 2, wobei ein Massenverhältnis eines Gehalts des polymerisierbaren Monomers A zu dem Gehalt des Tensids 4 bis 100 beträgt.

4. Elektronenstrahlhärtbare Tinte nach einem der Ansprüche 1 bis 3, ferner umfassend ein polymerisierbares Monomer B mit einem ClogP-Wert von mehr als 2,3 und einer Viskosität von 20 mPa·s oder weniger.

5. Elektronenstrahlhärtbare Tinte nach Anspruch 4, wobei ein Massenverhältnis eines Gehalts des polymerisierbaren Monomers A zu einem Gehalt des polymerisierbaren Monomers B 0,25 bis 2,3 beträgt.

6. Elektronenstrahlhärtbare Tinte nach einem der Ansprüche 1 bis 5, wobei das polymerisierbare Monomer A einen ClogP-Wert von 1,5 oder weniger aufweist.

7. Elektronenstrahlhärtbare Tinte nach einem der Ansprüche 1 bis 6, wobei ein Gehalt eines polymerisierbaren Monomers mit einer Viskosität von 60 mPa·s oder mehr bei 25 °C 20 Massen-% oder weniger relativ zu der Gesamtmenge der elektronenstrahlhärtbaren Tinte beträgt.

8. Elektronenstrahlhärtbare Tinte nach einem der Ansprüche 1 bis 7, wobei das Tensid ein Tensid auf Silikonbasis ist.

9. Elektronenstrahlhärtbare Tinte nach einem der Ansprüche 1 bis 8, wobei der Gehalt des Tensids 1,0 Massen-% bis 10 Massen-% relativ zu der Gesamtmenge der elektronenstrahlhärtbaren Tinte beträgt.

10. Elektronenstrahlhärtbare Tinte nach einem der Ansprüche 1 bis 9, wobei ein gewichteter Durchschnitt von ClogP-Werten aller polymerisierbaren Monomere, die in der Tinte enthalten sind, 0,9 bis 2,5 beträgt.

11. Elektronenstrahlhärtbare Tinte nach einem der Ansprüche 1 bis 10, wobei das Tensid ein Tensid mit einer polymerisierbaren Gruppe ist.

12. Bildaufzeichnungsverfahren, umfassend:

    einen Schritt des Bildens eines Tintenfilms durch Aufbringen der elektronenstrahlhärtbaren Tinte nach einem der Ansprüche 1 bis 11 auf ein Substrat; und
    einen Schritt des Bestrahlens des Tintenfilms mit einem Elektronenstrahl.

13. Bildaufzeichnungsverfahren nach Anspruch 12, wobei:

    der Schritt des Bildens des Tintenfilms sequentielles Anbringen von n Arten der elektronenstrahlhärtbaren Tinte

umfasst, wobei n eine ganze Zahl von 2 oder mehr ist, und
ein Tensidgehalt in der m-ten aufgetragenen elektronenstrahlhärtbaren Tinte höher ist als ein Tensidgehalt in der (m - 1)-ten aufgetragenen elektronenstrahlhärtbaren Tinte, wobei m eine ganze Zahl von 2 bis n ist.

## Revendications

**1.** Encre durcissable par faisceau d'électrons comprenant :

un monomère polymérisable A ayant une valeur de ClogP de 2,3 ou moins, où la valeur de ClogP est calculée à l'aide de la méthode de fragment avec ChemDraw Professional 16 ; et
un tensioactif,
dans laquelle une teneur en tensioactif est de 0,3 % en masse ou plus par rapport à une quantité totale de l'encre durcissable par faisceau d'électrons, et
une teneur en initiateur de polymérisation est inférieure à 1 % en masse par rapport à la quantité totale de l'encre durcissable par faisceau d'électrons, **caractérisée en ce que** le monomère polymérisable A comprend au moins un composé choisi dans le groupe constitué de diacrylate de triéthylène glycol et de diacrylate de tétraéthylène glycol.

**2.** Encre durcissable par faisceau d'électrons selon la revendication 1, dans laquelle une teneur en monomère polymérisable A est de 20 % en masse ou plus par rapport à la quantité totale de l'encre durcissable par faisceau d'électrons.

**3.** Encre durcissable par faisceau d'électrons selon la revendication 1 ou la revendication 2, dans laquelle un rapport de masse entre une teneur en monomère polymérisable A et la teneur en tensioactif est compris entre 4 et 100.

**4.** Encre durcissable par faisceau d'électrons selon l'une quelconque des revendications 1 à 3, comprenant en outre un monomère polymérisable B ayant une valeur de ClogP supérieure à 2,3 et une viscosité de 20 mPa·s ou moins.

**5.** Encre durcissable par faisceau d'électrons selon la revendication 4, dans laquelle un rapport de masse entre une teneur en monomère polymérisable A et une teneur en monomère polymérisable B est compris entre 0,25 et 2,3.

**6.** Encre durcissable par faisceau d'électrons selon l'une quelconque des revendications 1 à 5, dans laquelle le monomère polymérisable A a une valeur de ClogP de 1,5 ou moins.

**7.** Encre durcissable par faisceau d'électrons selon l'une quelconque des revendications 1 à 6, dans laquelle une teneur en monomère polymérisable ayant une viscosité de 60 mPa·s ou plus à 25 °C est de 20 % en masse ou moins par rapport à la quantité totale de l'encre durcissable par faisceau d'électrons.

**8.** Encre durcissable par faisceau d'électrons selon l'une quelconque des revendications 1 à 7, dans laquelle le tensioactif est un tensioactif à base de silicone.

**9.** Encre durcissable par faisceau d'électrons selon l'une quelconque des revendications 1 à 8, dans laquelle la teneur en tensioactif est comprise entre 1,0 % en masse et 10 % en masse par rapport à la quantité totale de l'encre durcissable par faisceau d'électrons.

**10.** Encre durcissable par faisceau d'électrons selon l'une quelconque des revendications 1 à 9, dans laquelle une moyenne pondérée des valeurs de ClogP de tous les monomères polymérisables inclus dans l'encre est comprise entre 0,9 et 2,5.

**11.** Encre durcissable par faisceau d'électrons selon l'une quelconque des revendications 1 à 10, dans laquelle le tensioactif est un tensioactif ayant un groupe polymérisable.

**12.** Procédé d'enregistrement d'images comprenant :

une étape de formation d'un film d'encre par application de l'encre durcissable par faisceau d'électrons selon l'une quelconque des revendications 1 à 11 sur un substrat ; et
une étape d'irradiation du film d'encre par un faisceau d'électrons.

**13.** Procédé d'enregistrement d'images selon la revendication 12, dans lequel :

l'étape de formation du film d'encre comprend l'application séquentielle de n types de l'encre durcissable par faisceau d'électrons, où n est un entier de 2 ou plus, et
une teneur en tensioactif dans l'encre durcissable par faisceau d'électrons appliquée m-ième est supérieure à une teneur en tensioactif dans l'encre durcissable par faisceau d'électrons appliquée (m - 1)-ième, où m est un entier de 2 à n.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020033443 A
- JP 2016180072 A
- JP 2018086726 A
- WO 2020012160 A1
- US 20150116432 A1